# EUROPEAN PATENT APPLICATION

(11) **EP 1 530 138 A1**
(43) Date of publication of application: **11.05.2005**
(21) Application number: 03025834.7
(22) Date of filing: 10.11.2003
(51) Int. Cl.: G06F 17/50

(54) **Generic measurement and calibration interface for development of control software**

(71) Applicant: ROBERT BOSCH GMBH, 70442 Stuttgart (DE)
(72) Inventor: Strehl, Karsten, 70376 Stuttgart (DE)

(57) **Abstract**

A generic model animation and in-model calibration interface for rapid prototyping and software development, which uses measurement and calibration technologies with a host-target architecture and a respective simulation system and method.

## Description

The present invention relates to a simulation system for computer-implemented simulation and verification of a control system under development as well as a computer-implemented method for simulating and verifying a control system under development. More particularly, the present invention relates to the so-called rapid prototyping of a control system for dynamic systems such as vehicles, aircrafts, ships, etc. as well as parts thereof. Further, the present invention relates to a computer program product with a computer-readable medium and a computer program stored on the computer-readable medium with program coding means which are suitable for carrying out such a process when the computer program is run on a computer.

### State of the Art

Rapid prototyping of control systems is commonly used in the automotive industry, aviation, etc. for early verification of the correct functional and real-time behavior of a control system under development. Like this, control strategies and algorithms for dynamic systems such as vehicles or parts thereof can be tested under real-world conditions without requiring the existence of the final implementation of the control loop.

A rapid prototyping system usually is characterized as being a hybrid hardware/software system, in general consisting of the following main components:
- a simulation target, consisting of one or several simulation processors with corresponding memory modules, each running basically a portion of a model of the control system under development,
- input interfaces composed of signals being fed by the plant (the outside world being controlled),
- output interfaces composed of signals feeding the plant, and
- communication interfaces for downloading the module from a host (often a personal computer) onto the simulation target, controlling the simulation experiment (start and stop commands, etc.), measuring and calibrating module signals and parameters, respectively.

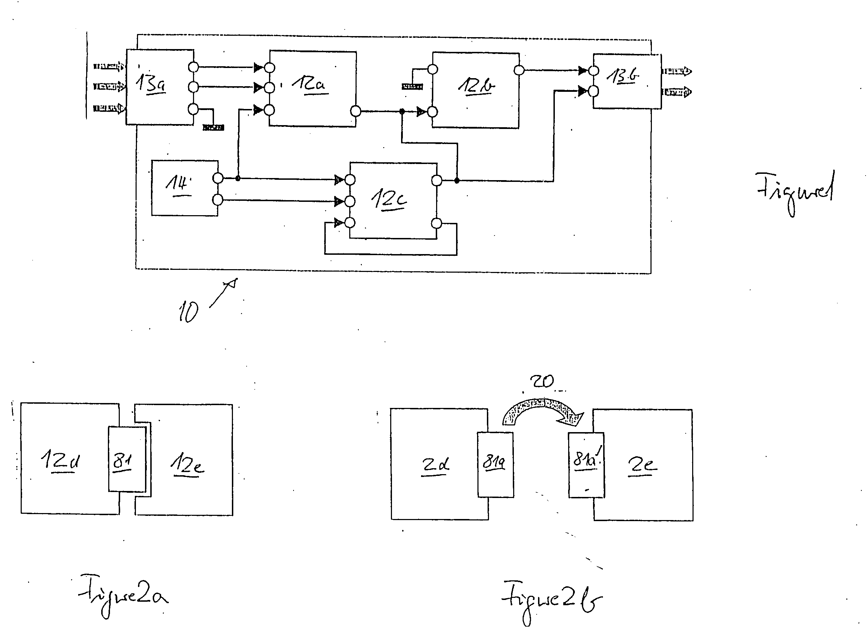

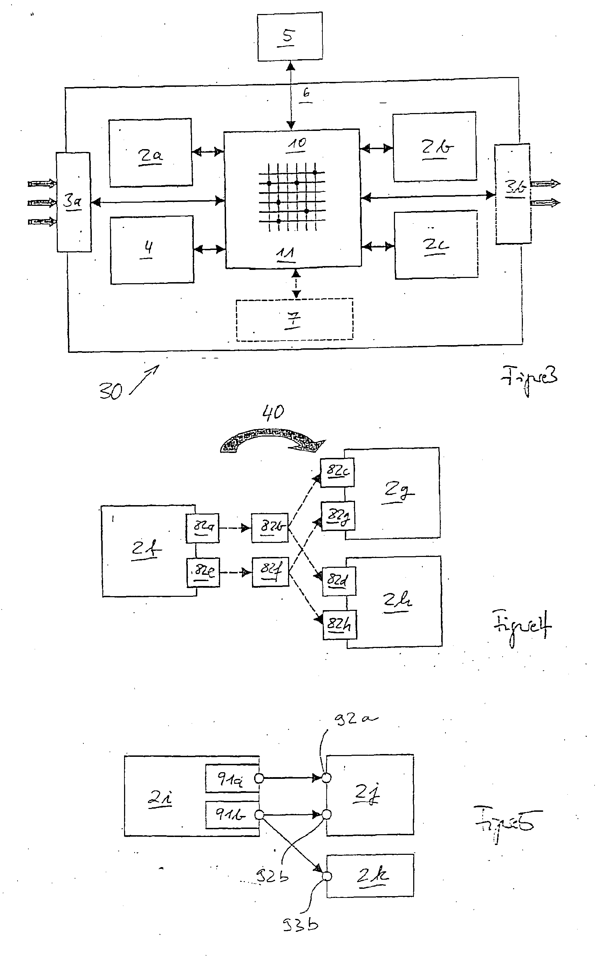

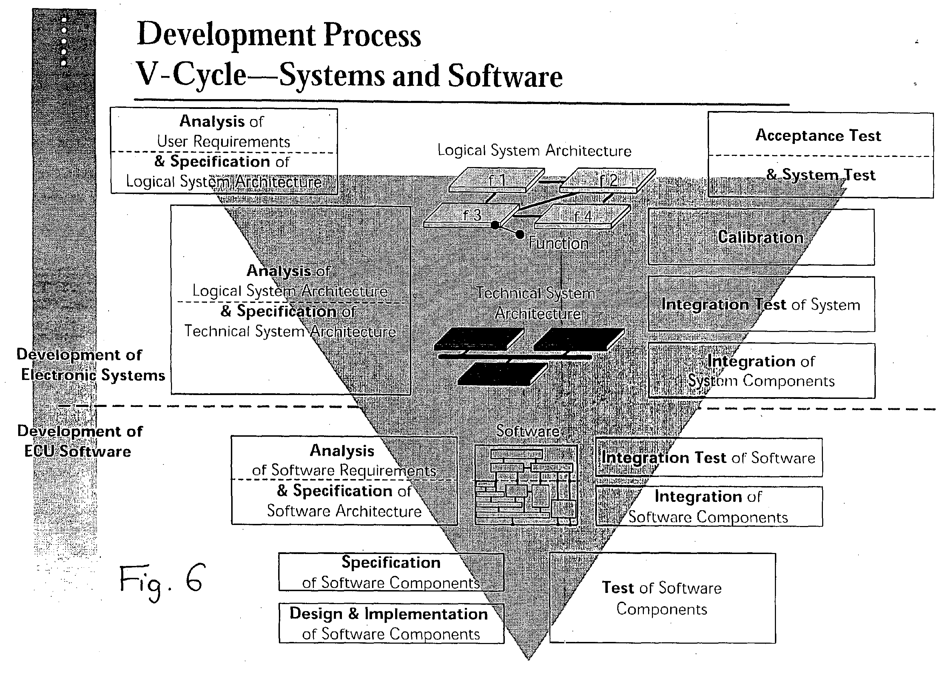

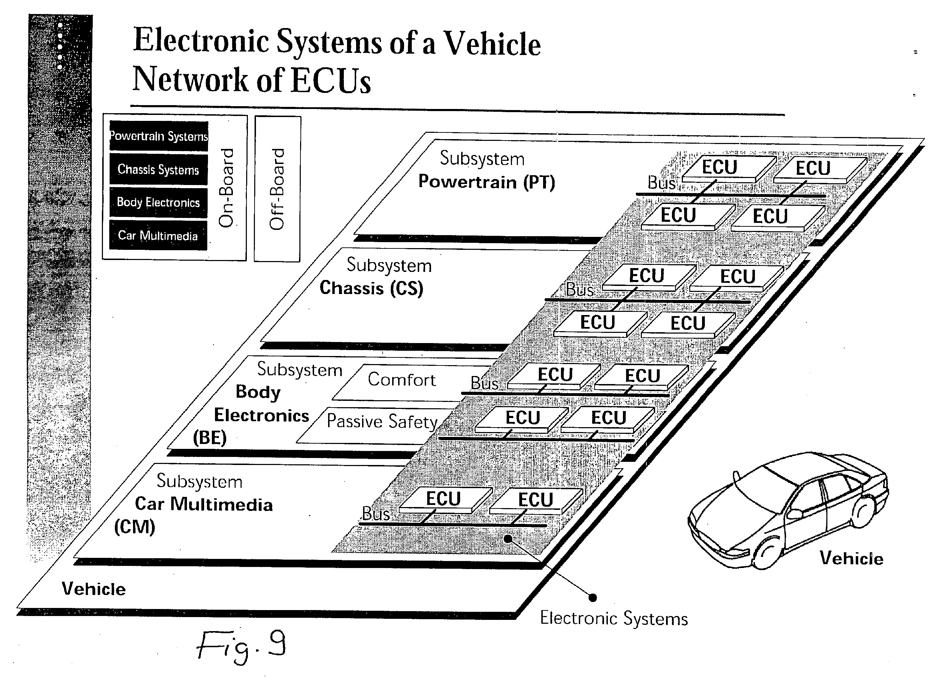

Figure 1 shows a conventional simulation system 10 at the model level as known from the prior art. Technically the known simulation system 10 comprises one or more simulation processors with corresponding memory modules on which portions 12a, 12b, 12c of a model of the control system under development (or so-called sub-models) are run. The simulation system 10 further comprises an input interface 13a and an output interface 13b for exchanging signals with the so-called outside world. Finally, the simulation system 10 comprises a communication interface for downloading the module from a host onto the simulation target, controlling the simulation experiment, measuring and calibrating module signals and parameters, respectively. Figure 1 is at the model level, not at the technical level. With 14 are stimuli signals named, used where no physical input signals are available. Separate fromthis is the communication interface later described with regard to figure 3. The inventive communication interface could be added into the figure 1 structure if desired.

Signals of the input and output interfaces can be analog (e.g., temperature or pressure sensor) or digital (e.g., communication protocol such as CAN). Within simulation experiments, the rapid prototyping system is used as integral part of the control loop, just the way finally the controller (electronic control unit) will be.

The preparation of a rapid prototyping experiment in general consists of the following steps:
1. creation of a mathematical model of the control system, for instance, by means of a behavioral modeling tool (such as MATLAB®/Simulink®¹ or ASCET-SD²) or by hand,
2. manual transformation (hand coding) or automated transformation (code generation) of the model into program code in some high-level programming language (C, for instance),
3. compilation and linkage of the program code into an executable,
4. download of the executable from the host onto the simulation target via the host-target communication interface, and
5. setup and invocation of the experiment from the host via the communication interface.

Frequently, several model parts (called modules in the following) from one or several sources (e.g., behavioral modeling tool, hand-written C code) are to be integrated with each other, so as to compose an entire control system's model. The communication among modules 12a, 12b, 12c as well as between modules and input or output interfaces 13a, 13b (likewise considered as modules in the following) is performed via signals connecting input and output ports, depicted as circles in Figure 1.

Conventionally, this communication is achieved by sharing the very same memory location (the same high-level language variable) for ports being connected with each other, where one module writes the current value of the signal into the given memory location and the other module reads from it.

In order to achieve this, the transformation of the model into executable code needs to be performed in a manner depending on the actual interconnection scheme, denoting that output port a of module A be connected with input port *b* of module *B*, for instance. In this example, both ports a and b would need to be statically mapped onto the very same memory location on the simulation target so as to enable inter-module communication.

With this conventional static interconnection approach, signals connect ports with each other in an inseparable manner. Whenever one or several connections between signals are to be established, modified or cut off, the entire process of model-to-code transformation, compilation and linkage, executable download, experiment setup and invocation needs to be performed. For real-world models, this process is very time consuming and may take up to several tens of minutes or even more. Especially when correcting a faulty connection being made inadvertently, current turn-around times are far too large. Further, as soon as the experiment has been downloaded and started, connections cannot be altered, added, or removed any longer.

The conventional approach to date is known to be employed by rapid prototyping systems such as those of ETAS GmbH (ASCET-SD product family), The Mathworks, Inc. (MATLAB®/Simulink®, Real-Time Workshop®, xPC Target) and presumably others.

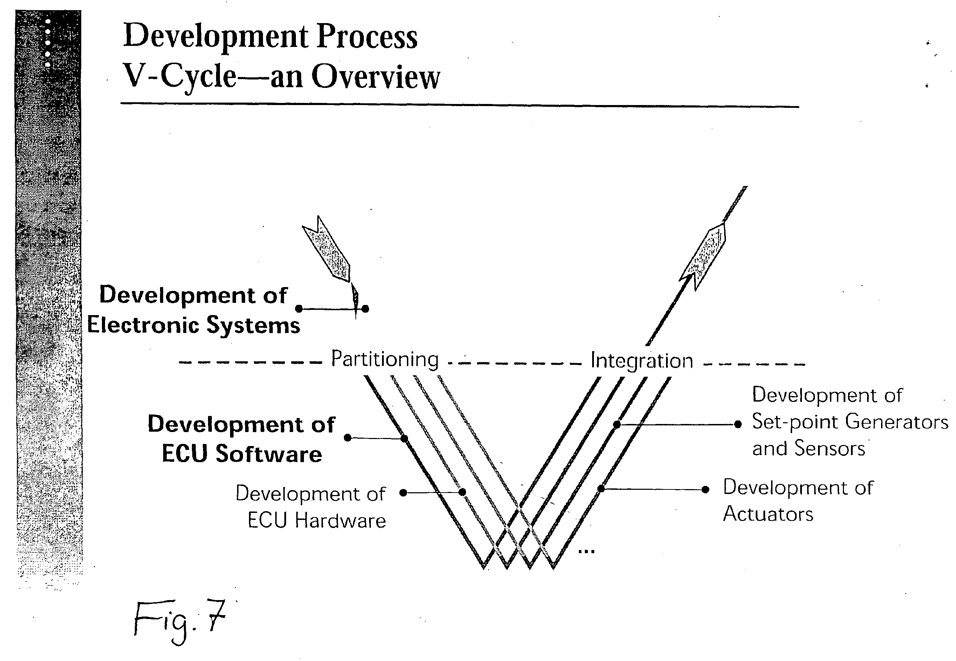

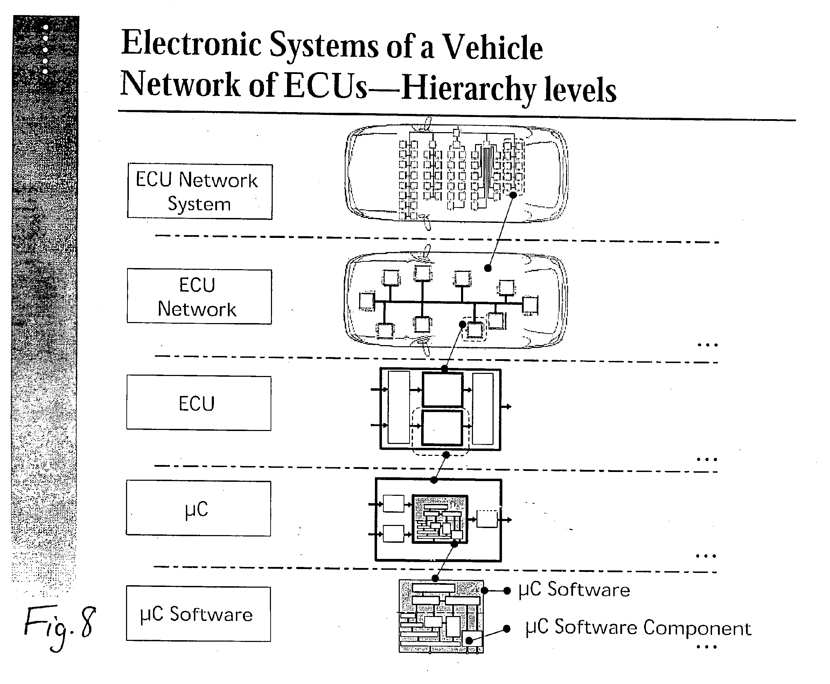

Such a static interconnection as known from the prior art is visualized in Figure 2a. Figure 2a shows a first module 12d and a second module 12e which are sharing a variable which is stored in a static memory location 81.

It is therefore an object of the invention to provide more flexible interconnection of hitherto static connections so that a simulation already being performed can be easily corrected, intercepted or modified. It is a further object of the present invention to improve communication between single components of a simulation systems as well as communication between single modules of a simulation model for providing a rapid prototyping of a control system of a vehicle.

These objects are achieved by proposing a simulation system with the features of claim 1 and a computer-implemented method for simulating and verifying a control system with the features of claim 11.

### Advantages of the invention

In contrast to the approach according to the prior art as described above, the dynamic interconnection approach of the present invention does not rely on interconnection scheme specific model-to-code transformation. Instead, this transformation is totally independent of the actual module interconnections being used. Rather, inter-module communication is performed in an explicit manner by using distinct memory locations instead of shared ones and copying or replicating signal values from one memory location to another when needed.

Since the interconnection scheme is not reflected by the mere simulation executable, it needs to be passed on to the simulation target differently. This is achieved by dynamically setting up the actual module interconnections via the host-target communication interface during experiment setup, after having downloaded the executable.

The exchange of signal values will be performed according to the respective interconnection scheme. No implicit naming conventions or the like as with the static memory sharing approach are required. Rather, the current value of a given signal is distributed from an output port to any connected input port by explicitly reading the value from the memory location associated with the output port and then replicating it to any memory location corresponding to a relevant input port.

The major advantages of this approach are:
- The turn-around times after altering the interconnection scheme are reduced significantly since the time consuming process of model-to-code transformation, compilation and linkage, and executable download needs not be repeated. This strongly supports the actual application of *rapid* prototyping.
- Signals connecting ports can be established, modified, or removed even during a running experiment without perceptible delay. This enables completely new possibilities of use such as the following:
   - correcting faulty connections on the fly, even without interrupting the experiment,
   - gradually setting up an experiment by putting portions of the entire model into operation little by little while continually establishing the final interconnection scheme,
   - spontaneously stimulating the model by establishing connections to its input ports,
   - switching an input port from a predefined stimulus module over to a real-world input signal,
   - comparing a number of implementation variants of the same module running in parallel by alternatively switching their outputs to the plant, or
   - swapping inputs or outputs to the rapid prototyping system virtually on the tool level, instead of first pulling out and again plugging in physical cable connections.

Therefore, according to the invention a simulation model is run to simulate and verify a control system during development, the simulation model comprises a number of sub-models which are run on the same or different nodes (processors) of a simulation system. Communication between the respective modules of the simulation model as well as the simulation system is performed via distinct and separate memory locations, the modules being dynamically connected with each other.

In a preferred embodiment of the invention, the data and/or signals are replicated consistently by means of a cross-bar switch. Preferably, this replication is performed under real time conditions.

In a further embodiment of the invention, the modules interconnect automatically via interconnection nodes and replicate data.

A consistent replication of data under real-time circumstances or conditions may be done via communication variables. The cross-bar switch as mentioned above provides means for consistently copying values of output signals to communication variables after reaching a consistent state.

Further, the cross-bar switch provides means for consistently passing these values to connected input signals before the respective modules continue computation. Depending on the respective real time architecture of the simulation system and/or the set-up or the real-time operating system a consistent copy mechanism may be achieved by atomic copy processes, blocking interrupts or the like. Under certain circumstances being determined by the respective real-time environment settings, signal variables or communication variables may be obsolete and then could be optimised away for higher performance.

According to an alternative embodiment of the invention, a distributed approach could be used for dynamic reconfiguration of module interconnections instead of the central approach as described above. In this alternative embodiment, ports could connect themselves to their respective counterparts and be responsible for signal value replication.

The invention also covers a computer program with program coding means which are suitable for carrying out a process according to the invention as subscribed above when the computer program is run on a computer. The computer program itself as well as stored on a computer-readable medium is claimed.

Further features and embodiments of the invention will become apparent from the description and the accompanying drawings.

It will be understood that the features mentioned above and those described hereinafter can be used not only in the combination specified but also in other combinations or on their own, without departing from the scope of the present invention.

The invention is schematically illustrated in the drawings by means of an embodiment by way of example and is hereinafter explained in detail with reference to the drawings. It is understood that the description is in no way limiting on the scope of the present invention and is merely an illustration of a preferred embodiment of the invention.

### Brief description of the drawings

In the drawings,
- Figure 1: is a schematic block illustration of a simulation system at the model level of the prior art as well as of the invention;
- Figure 2a: is a schematic illustration of a static interconnection of the prior art;
- Figure 2b: is a preferred embodiment of a dynamic interconnection according to the present invention;
- Figure 3: is a preferred embodiment of a simulation system according to the invention using a dynamic interconnection according to Figure 2b;
- Figure 4: is an example of a consistent replication under real-time circumstances via communication variables according to the invention; and
- Figure 5: is an alternative embodiment of an interconnection scheme according to the invention.

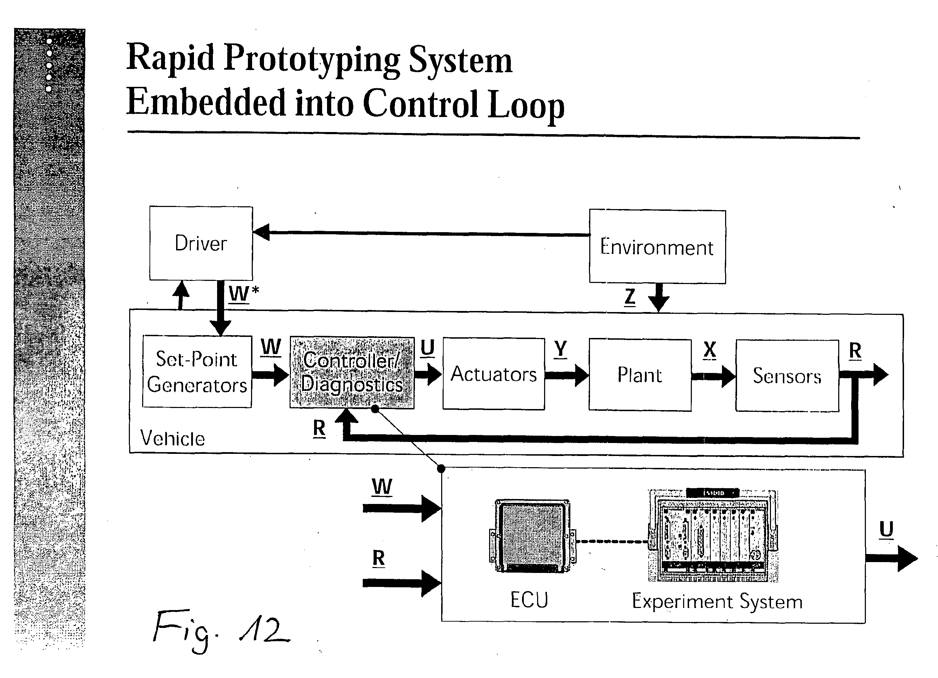

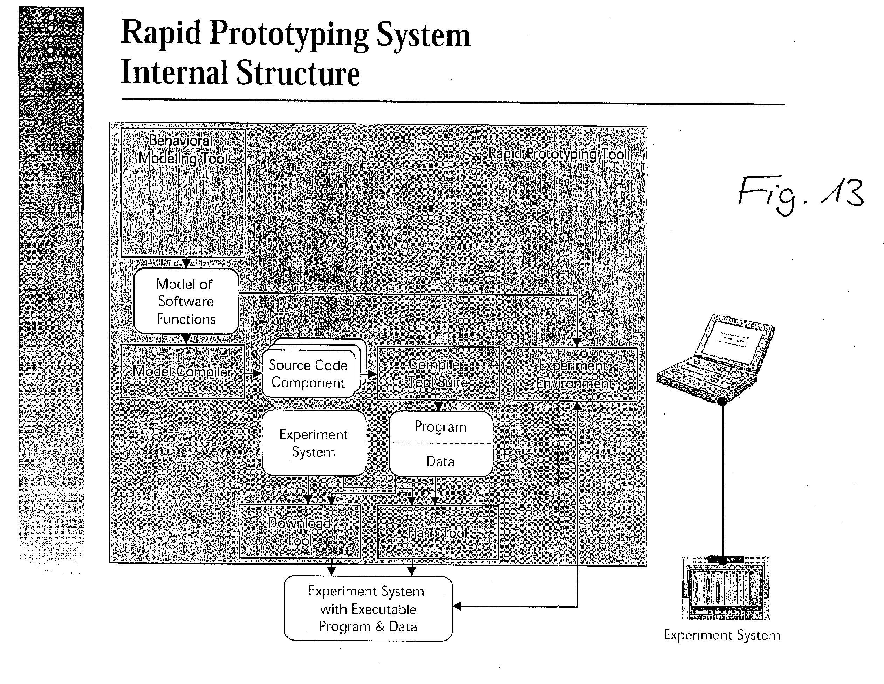

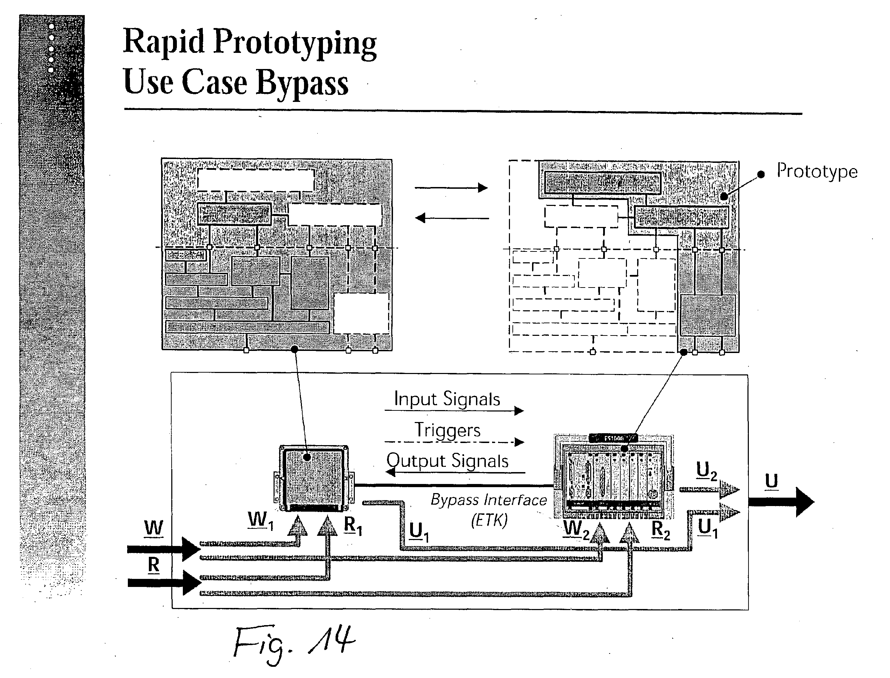

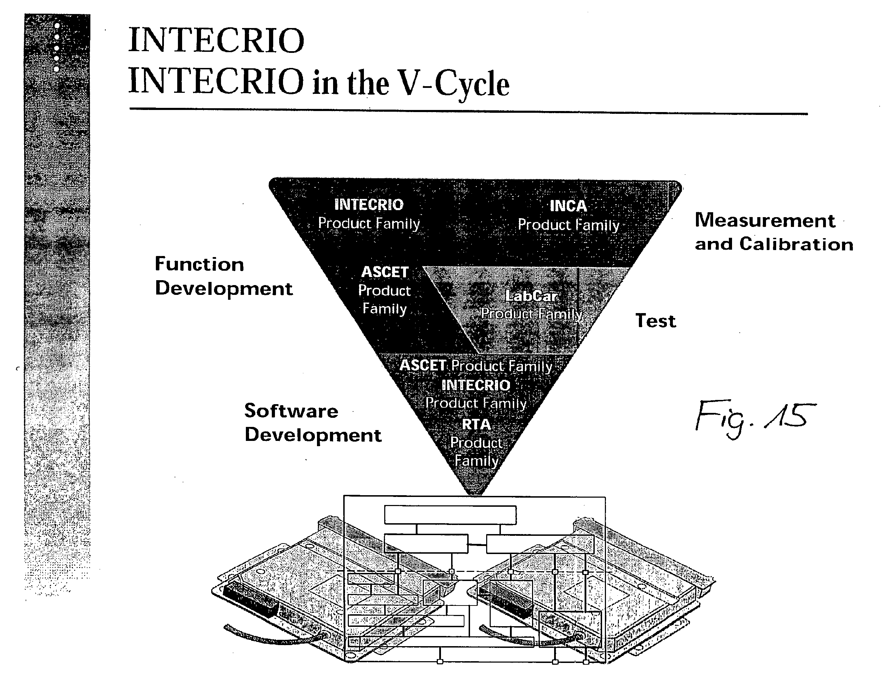

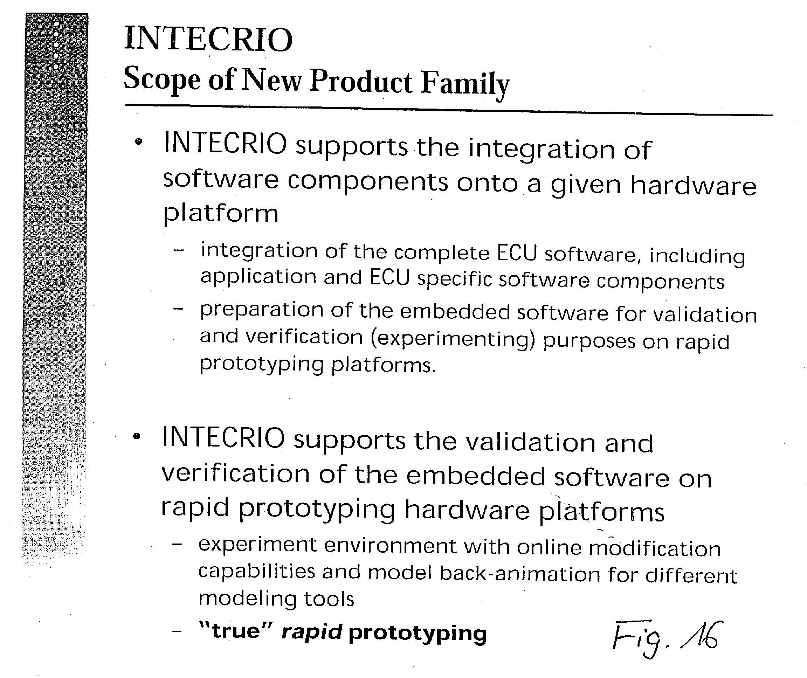

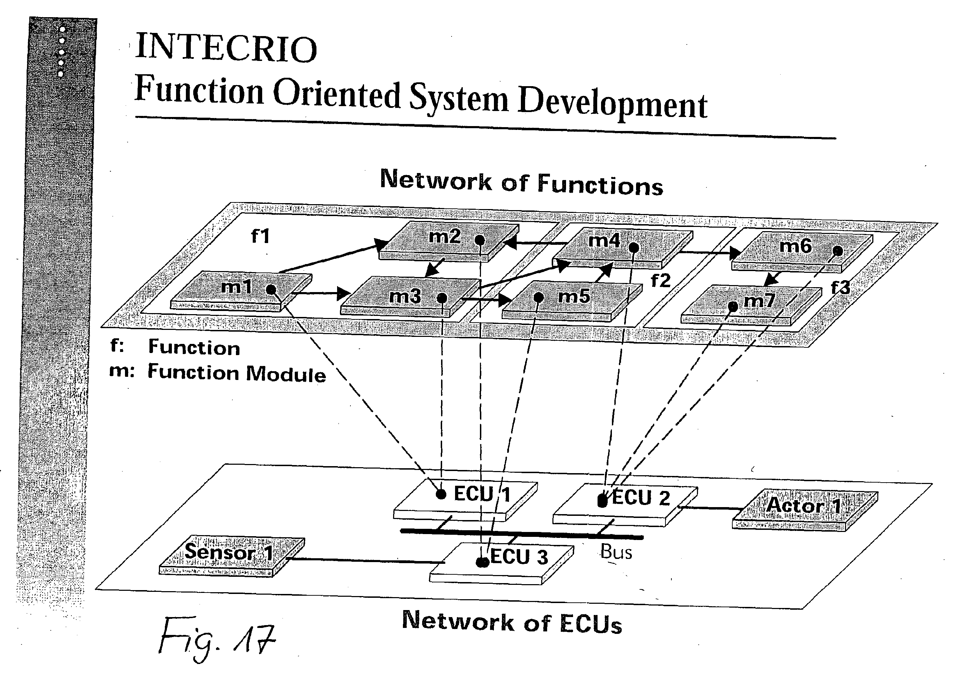

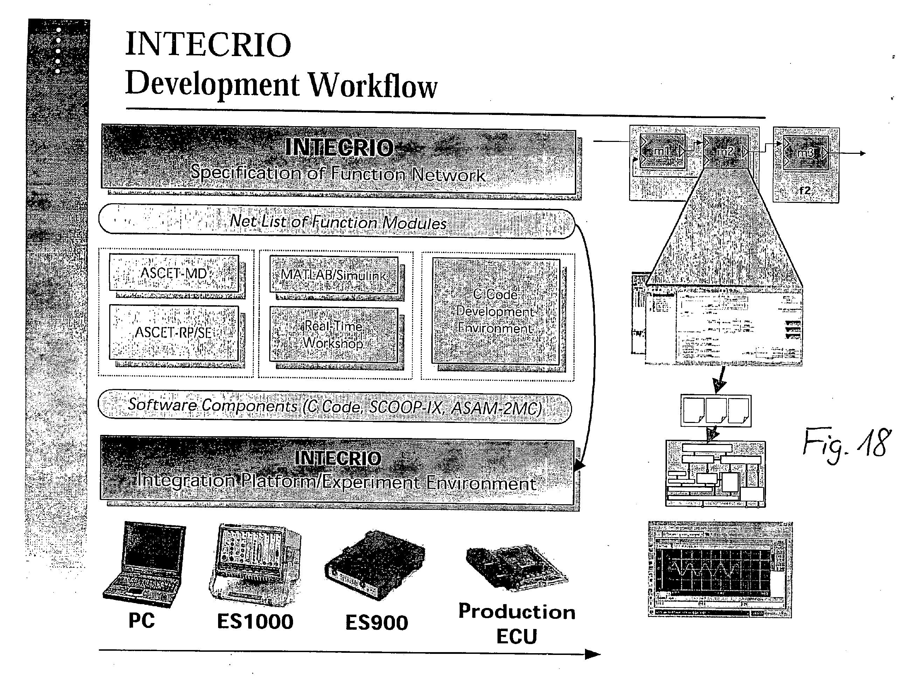

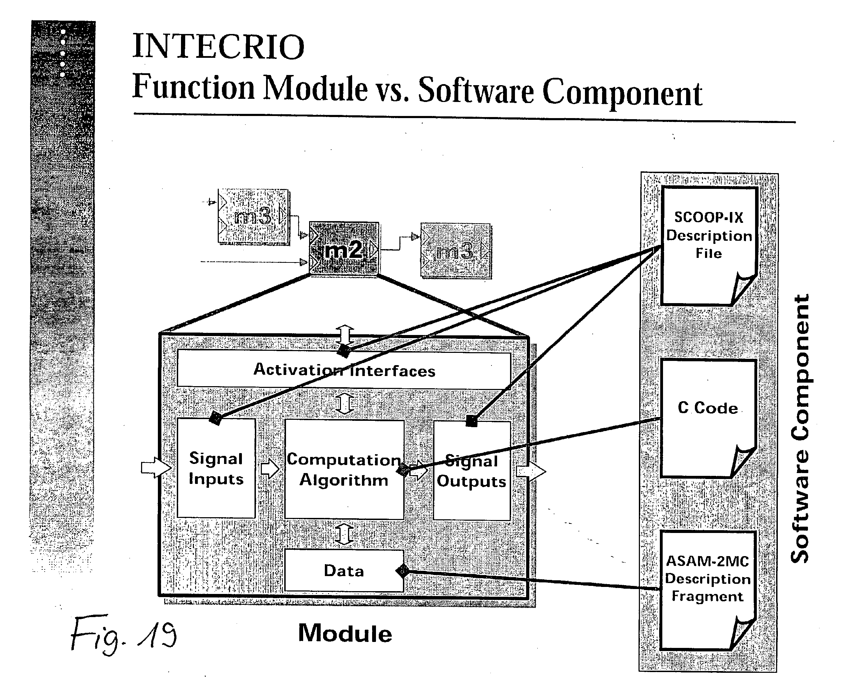

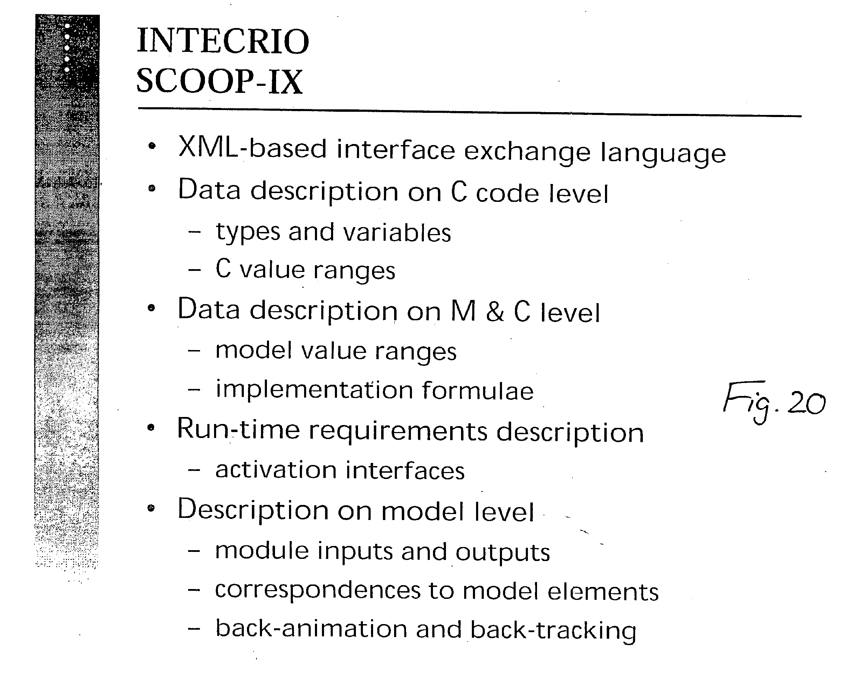

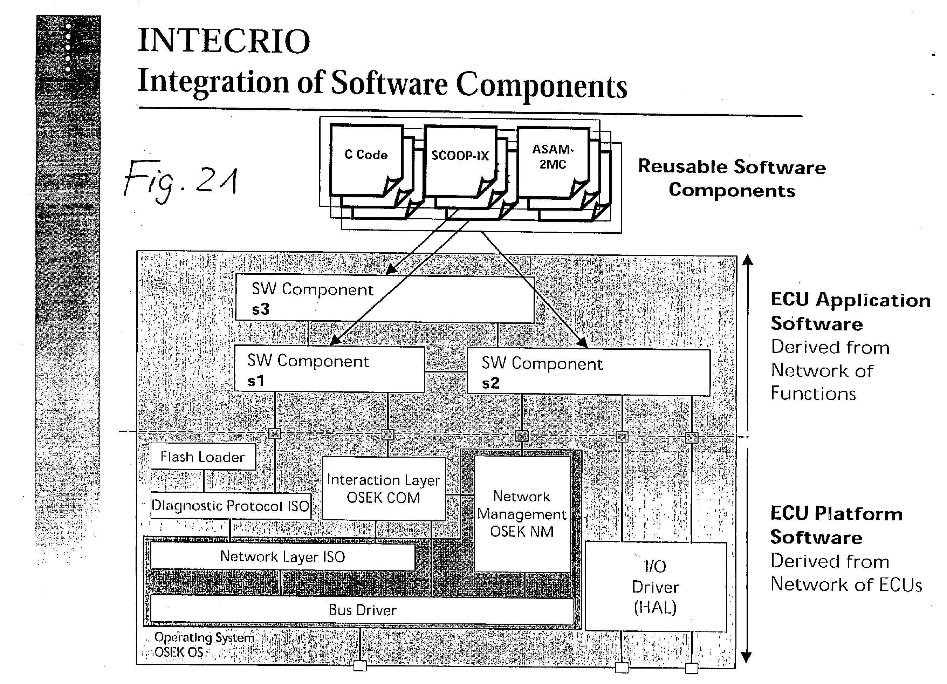

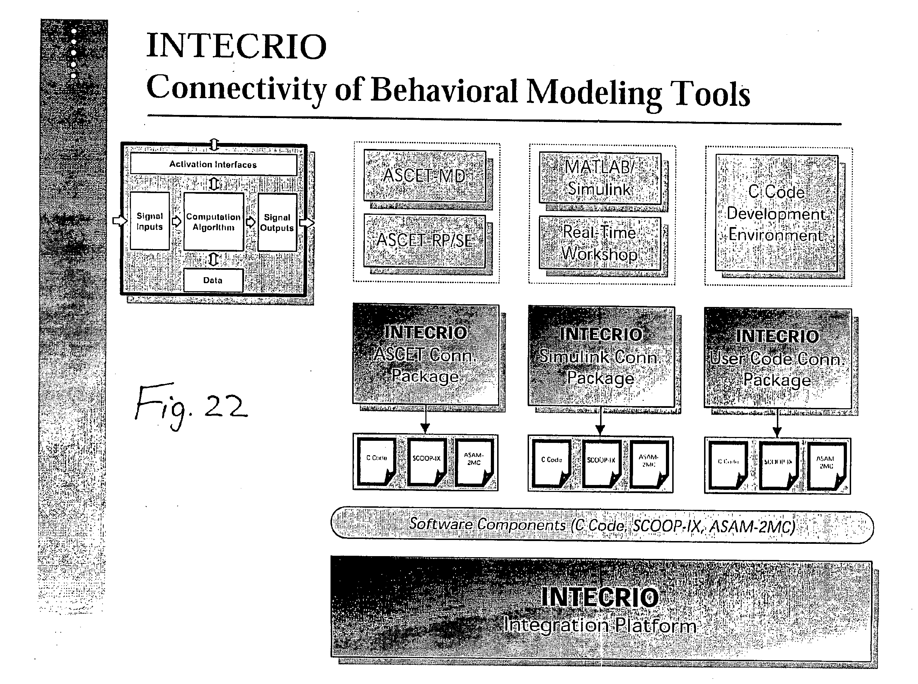

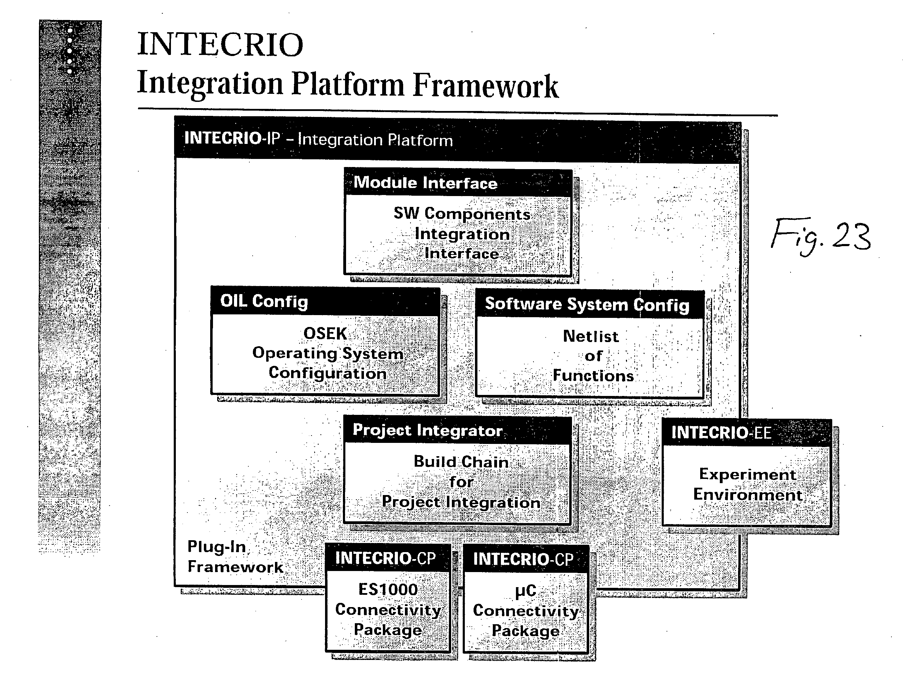

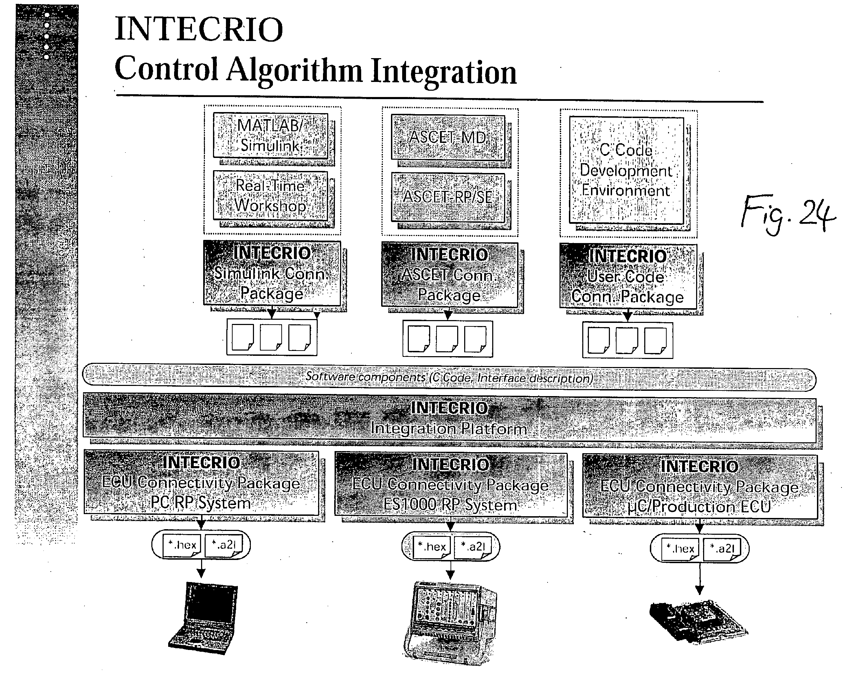

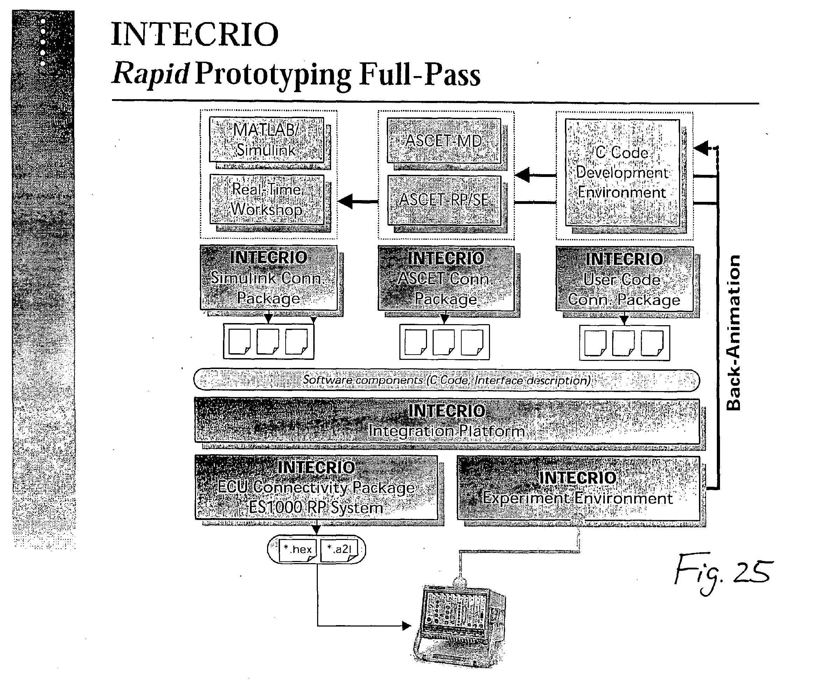

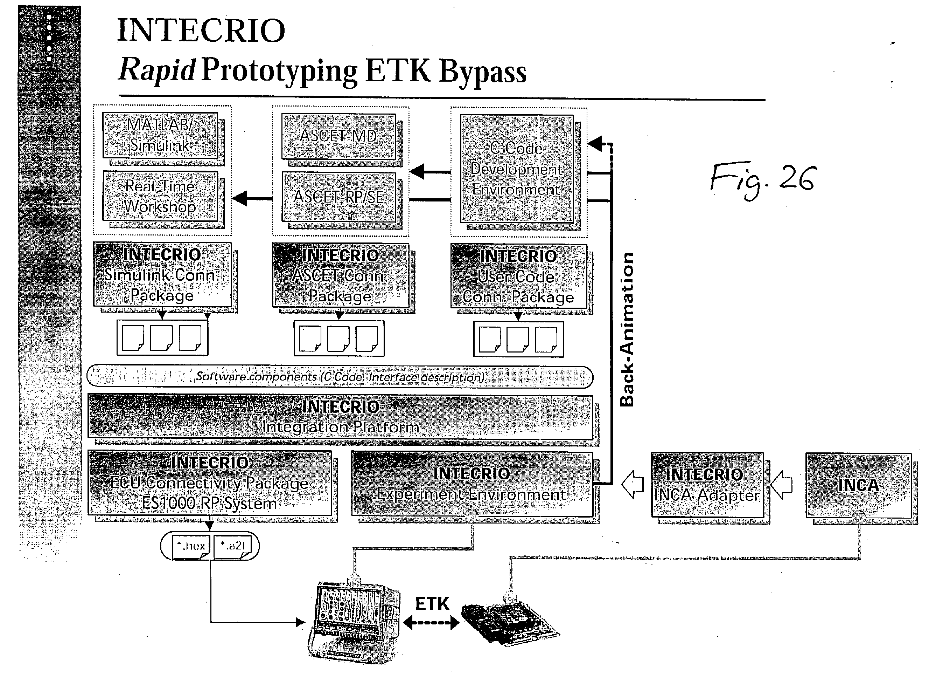

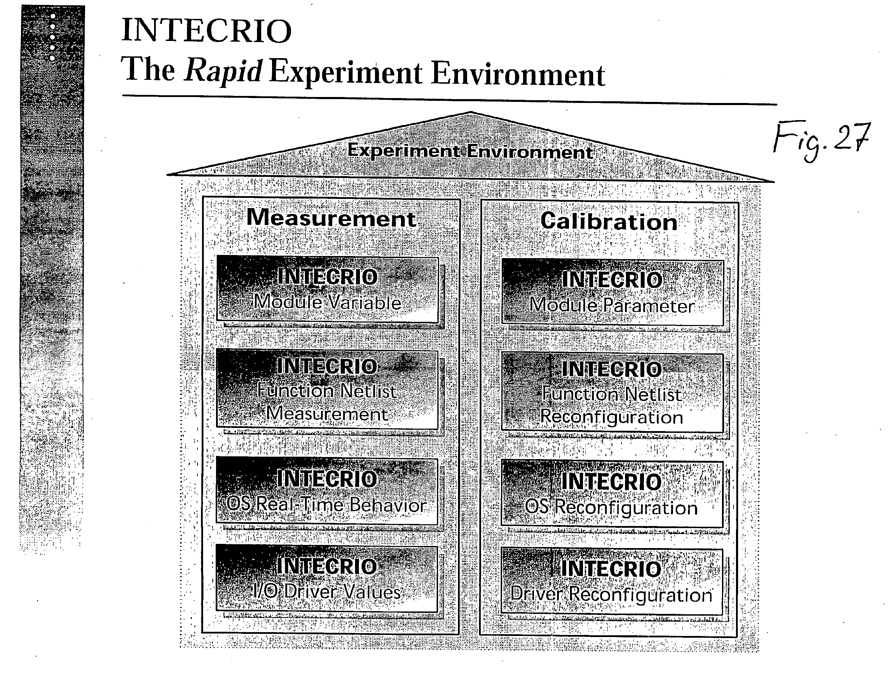

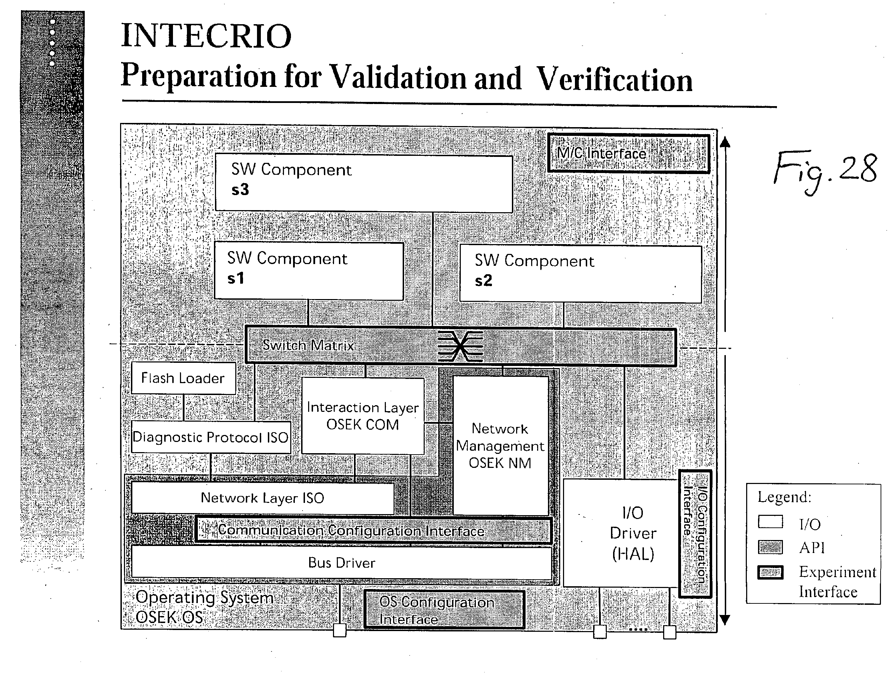

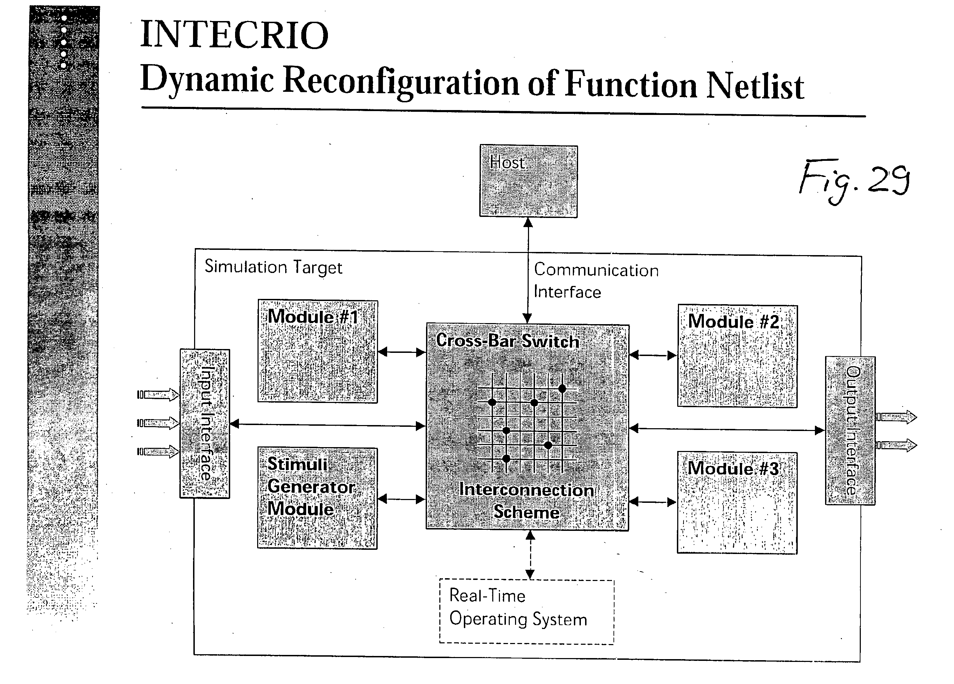

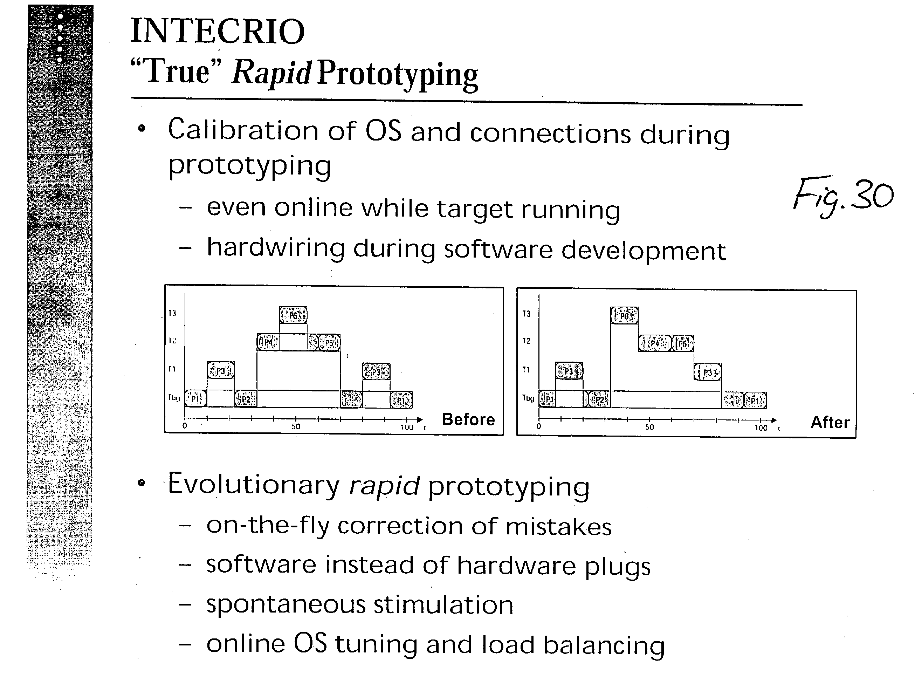

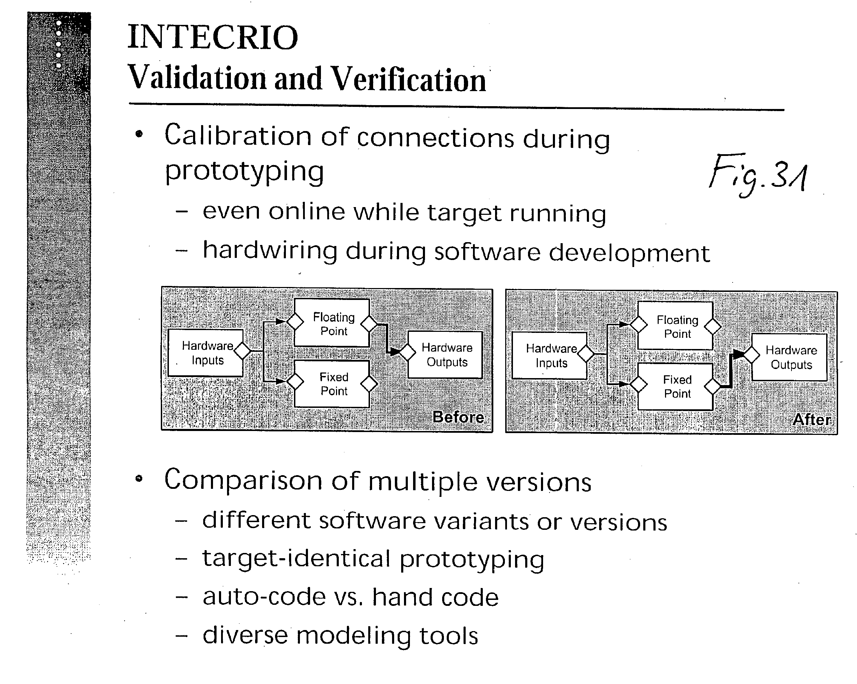

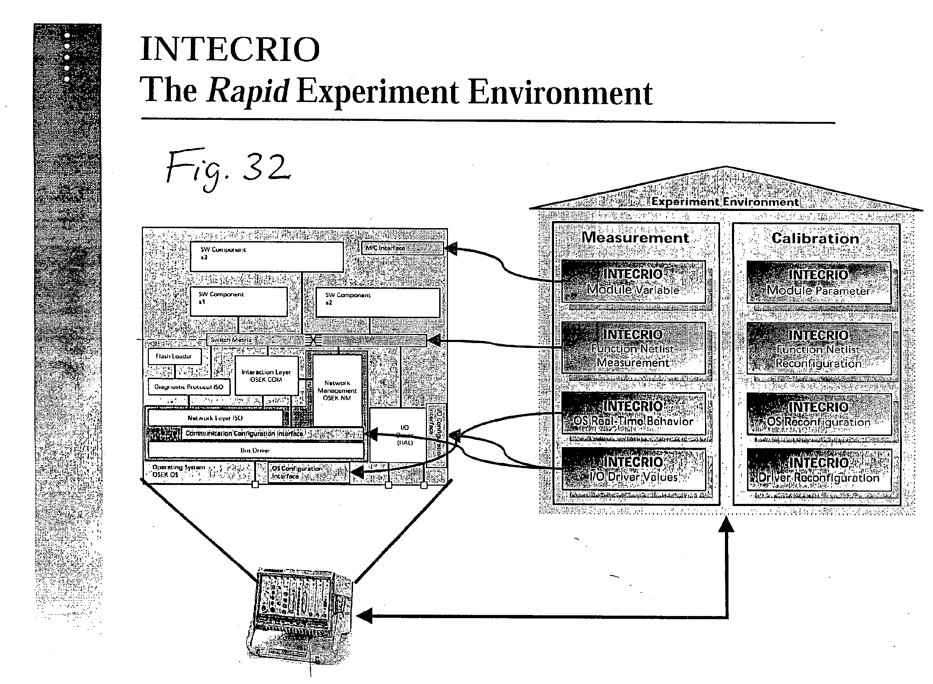

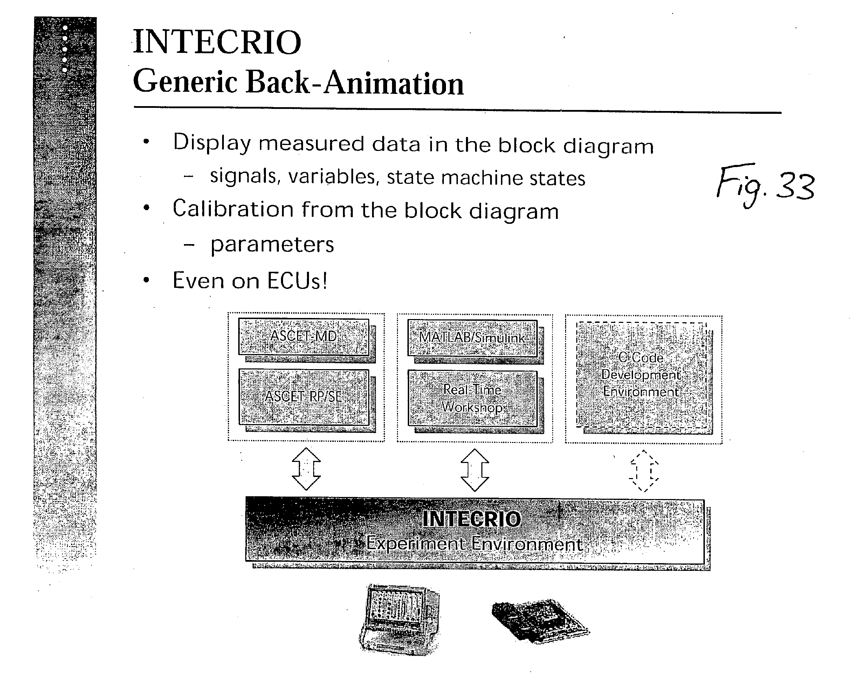

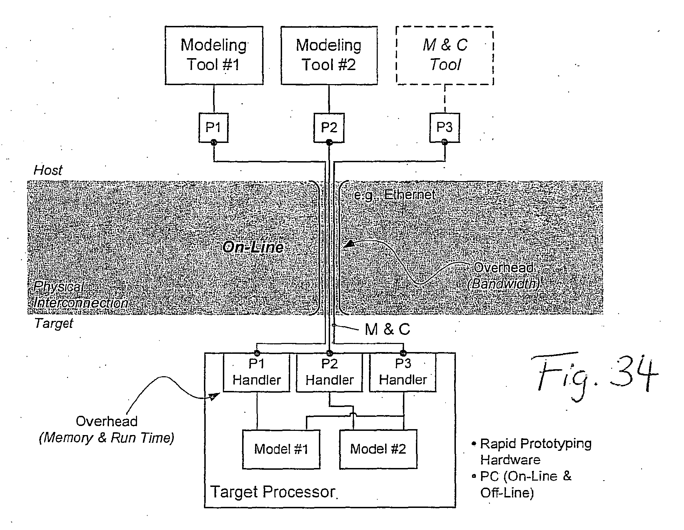

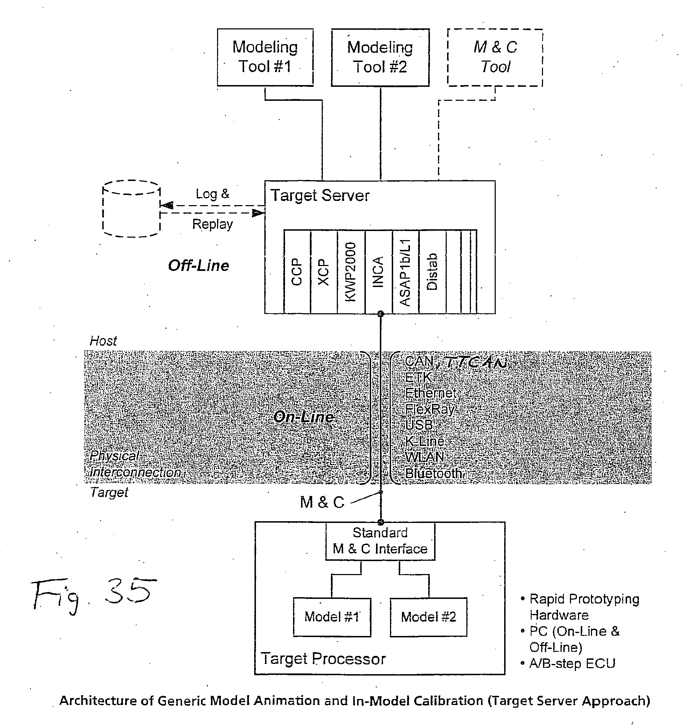

The other Figures 6 to 33 and also 34 and 35, with the respective description show embodiments of the invention.

### Embodiments

According to the invention and in contrast to the static connection known from the prior art as described above with reference to Figure 2a, a dynamic interconnection approach via distinct memory locations is provided. The principles of the dynamic interconnection according to the invention is visualized in Figure 2b wherein data 81a of a first module 2d are copied or replicated by means of dynamic replication 20 in a distinct memory location of a second module 2e as according data 81a'.

Several architectures underlying the dynamic reconfiguration approach may be conceived. With reference to Figure 3, a first example for a simulation system 30 according to the invention is described in the following as the so-called central approach.

The main component of the central approach simulation system 30 is a so-called cross-bar switch 10 with an interconnection scheme 11. The simulation system 30 further comprises a plurality of modules 2a, 2b, 2c, an input interface 3a, an output interface 3b, a stimuli generator module 4 as well as a real-time operating system 7.

As visualized by the double headed arrows in Figure 3, all components of simulation system 30 are interconnected with each other via the cross-bar switch, the interconnection scheme 11 defining which input and output ports of modules on the simulation target are connected with each other. The interconnection scheme corresponds to the totality of connections in a block diagram wherein each block corresponds to one of the modules being integrated on the simulation target 30.

The interconnection scheme 11 could be conceived as a two-dimensional switch matrix wherein both dimensions denote the modules' ports and the matrix values define whether the respective ports are connected with each other (and possibly the signal flow direction).

A simulation host 5 is connected with the cross-bar switch 10 via a host-target communication interface 6 and constitutes the human-machine interface to the rapid prototyping system.

The host 5 enables the configuration and reconfiguration of the interconnection scheme, preferably supported by some graphical user interface.

The host-target communication interface 6 connects the simulation host 5 with the simulation target 30. In general, it is based on some wired or wireless connection (serial interface, Ethernet, Bluetooth, etc.) and standardized or proprietary communication protocols (e.g., ASAP1b, L1). It provides at least the following functionality:
- download of the simulation executable from the host 5 to the simulation target 30 and
- download of configuration data defining the interconnection scheme 11.

Further, it may provide functionality for
- controlling the experiment, e.g. for starting and stopping the simulation,
- measuring values of model signals, interconnection signals, and input or output signals,
- calibrating model parameters, etc.

The cross-bar switch 10 runs on the simulation target and is connected with
- the simulation host 5 via the host-target communication interface 6,
- modules 2a, 2b, 2c representing model portions or sub-models of the control system under development,
- modules 3a, 3b representing input and output interfaces to the control system's plant,
- modules 4 serving as stimuli generators to the model, and
- preferably a real-time operating system 7 underlying the simulation experiment.

Before starting a simulation experiment, the initial interconnection scheme 11 is downloaded from the host 5 via the host-target communication interface 6 into the cross-bar switch 10.

During a running experiment, the cross-bar switch 10 performs the actual communication among modules and components by copying signal values from output ports to input ports. The way this replication process is performed is defined by the interconnection scheme 11.

The interconnection scheme 11 can be reconfigured after interrupting or even during a running simulation. Thus, module interconnections can be altered on the fly, without perceptible delay.

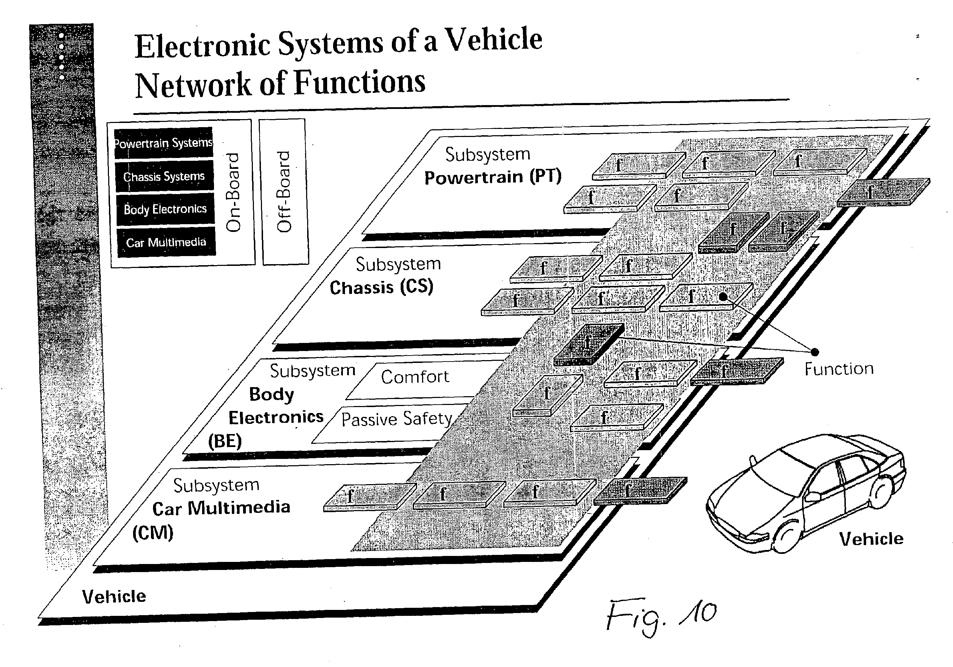

Referring now to Figure 4, a preferred alternative of a transmission of signals and/or data according to the invention is illustrated. By means of dynamic replication 40, signal and/or data values 82a, 82e of a first module 2f can be buffered as communication variables 82b, 82f, respectively, in distinct memory locations. By means of further dynamic replication 40, second and third modules 2g, 2h receive respective signal and/or data values 82c, 82g and 82d, 82h, respectively.

Thus, data consistency within a real-time environment is ensured. Each module 2f, 2g, 2h may compute at e.g. a different rate or upon interrupt triggers, and data replication 40 is performed by means of communication variables 82b, 82f buffering the current signal values. Thus, the values of several output signals which as a whole constitute a valid state are guaranteed to be copied in a consistent manner such that modules being fed by these output signals may themselves rely on a valid state.

As already mentioned above, the cross-bar switch 10 provides means for
- consistently copying values of output signals to communication variables after reaching a consistent state and
- consistently passing these values to connected input signals before the respective modules continue computation.

The consistent copy mechanism as described may be achieved by atomic copy processes, blocking interrupts or the like, depending on the underlying real-time architecture and operating system.

Under certain circumstances being determined by the respective real-time environment settings, signal variables or communication variables may be obsolete and then could be optimized away for higher performance.

The above-described dynamic reconfiguration approach could be extended by signal conditioning facilities. In order to achieve this, each signal value may be influenced during inter-module communication in a pre-defined manner after reading the original value from the source memory location and before writing to the target memory location.

Possible signal conditioning operations are:
- implementation formula adaptation (e.g., scale or offset modification, saturation) or
- basic mathematical operations (e.g., sum, difference, multiplication of signals, mapping via look-up table or characteristic with interpolation, constant value).

The kind or operation being applied and the respective parameters are considered as being part of the interconnection scheme. Each of them can be configured and reconfigured in a dynamic manner, as can module interconnections. This enhancement greatly widens the usefulness of the dynamic reconfiguration approach.

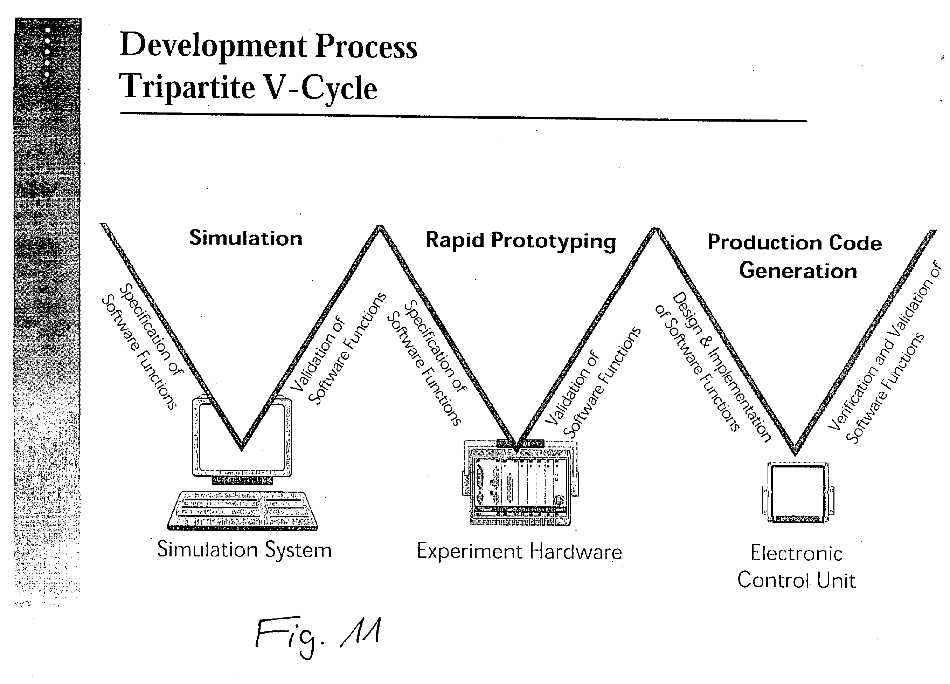

Referring now to Figure 5, a distributed approach for dynamic reconfiguration of module interconnections which could be used instead of the central approach employing a distinct cross-bar switch component on the target is described. Rather than having a central component copy signal values, ports could "connect themselves" to their respective counterparts and be responsible for signal value replication.

For instance, this could be achieved by having input ports 92a, 92b and 93b of modules 2j and 2k register themselves at output port servers 91a, 91b of module 2i upon connection, each of which represents a given output port. Communication could be performed either following a pull approach (input port queries signal value) or a push approach (multi-cast of signal value, invoked by output port). Thus, the intelligence for value replication is distributed over the system's components instead of concentrating it in a central cross-bar switch component.

### Generic Model Animation and In-Model Calibration Interface for Rapid Prototyping and Software Development

Rapid prototyping of control systems is commonly used in the automotive industry, aviation, etc., for early verification of the correct functional and real-time behavior of a control system under development. Like this, control strategies and algorithms for dynamic systems such as vehicles or parts of them can be tested under real-world conditions without requiring the existence of the final implementation of the control loop.

Following rapid prototyping, the control system's final software is being developed. The result is a production quality software executable for the electronic control unit being targeted. Particularly, this phase involves coding the software, testing and observing it under real-world conditions, and calibrating its parameters, so as to tune the behavior according to given requirements. The basis for the latter two steps are measurement and calibration (M & C) technologies.

M & C technologies conventionally have a host/target architecture where
- the host in general is the PC running the M & C tool,
- the target mostly is an embedded computer running the controller, e.g.,
   - dedicated experiment hardware for rapid prototyping or
   - an electronic control unit (ECU) for software development, and
- host and target are connected with each other via dedicated M & C communication interfaces.

Of both host and target, several instances may be involved in a distributed M & C system.

The M & C tool usually performs tasks such as
- measuring the values of variables in the control system's software, displaying them in form of graphical instruments such as scopes, dials, gauges, or numerical displays, and logging them onto disk, and
- calibrating the values of parameters, e.g., scalars, arrays, or interpolated maps, by displaying them in form of graphical input devices such as sliders, buttons, knobs, curves and 3D maps, or numerical displays, and sending any alterations of the current value made by the user down to the control system's software.

M & C tools rely on a number of standardized M & C interfaces being either true or de-facto standards, especially in the automotive industry. The availability of those interfaces can be assumed in automotive hardware for both rapid prototyping or software development, especially for A-step and B-step ECUs. In this context, experiment environments as used for rapid prototyping are considered M & C tools as well, though of restricted or partly different functionality.

M & C interfaces need to be supported by both software and hardware, on the host as well as on the target. Both are connected with each other via some physical interconnection running some communication protocol. The M & C tool on the host in general uses software drivers for this purpose, while the target hardware runs dedicated protocol handlers. Examples for M & C protocols are CCP, XCP, KWP2000, or the INCA¹, ASAP1b²/L1¹, and Distab¹ protocols. Physical interconnections are, e.g., CAN, ETK³, Ethernet, FlexRay, USB, K-Line, WLAN (IEEE 802.11), or Bluetooth.
¹ INCA, L1, and Distab protocol are communication protocols proprietary to ETAS GmbH (a Robert Bosch GmbH subsidiary).
² The ASAP1b communication protocol has been standardized by the ASAM association.
³ The ETK is an ETAS proprietary physical interconnection.

For the development of embedded control systems, often behavioral modeling tools are employed, such as ASCET⁴, MATLAB®/Simulink®⁵, Stafemate MAGNUM™⁶, and UML or SDL tools. These tools in general provide some graphical user interface for describing a control system's structure and behavior by means of block diagrams, state machines, message sequence charts, flow diagrams, etc. Like this, a mathematical model of the control system may be created.
⁴ ASCET is a product family by ETAS GmbH.
⁵ MATLAB®, Simulink®, and Real-Time Workshop® are registered trademarks of The Mathworks, Inc.
⁶ Statemate MAGNUM™ is a registered trademark of I-Logix, Inc.

Once the model is available, an automated transformation (code generation) of the model into program code in some high-level programming language (C, for instance) and finally in an executable program can be performed, either for rapid prototyping or as the production quality ECU software.

As a convenient way of testing and debugging a control system's software or the model itself, many modeling tools provide means for animating the model during its simulation or execution by visualizing its behavior, e.g., by
- displaying current signal values on top of signal lines,
- displaying them in a graphical instrument, or
- highlighting active and previously active state machine states
directly within the modeling environment. Like this, no separate experiment environment is needed. Further, some tools provide the possibility of directly calibrating parameter values via the modeling environment, using the normal user interface of the modeling tool.

As of today, this conventional approach of model animation and in-model calibration is available on experiment hardware only, for instance, on a PC running both the modeling tool and the experiment at the same time (off-line simulation) or together with dedicated rapid prototyping hardware (on-line simulation). Further, proprietary communication protocols are used, e.g., the external mode protocol of MATLAB®/Simulink® or the L1 protocol in ASCET.

### Architecture of Conventional Model Animation and In-Model Calibration

The conventional approach to date is known to be employed by rapid prototyping systems such as those of ETAS GmbH (ASCET product family), The Mathworks, Inc. (MATLAB®/Simulink®, Real-Time Workshop®, xPC Target), I-Logix, Inc. (Statemate MAGNUM™), dSpace GmbH (Prototyper, RTI, ControlDesk), and presumably others.

### The Basic Concepts

In contrast with the above-described approach, the generic model animation and in-model calibration approach being the subject of this invention does not rely on either dedicated simulation or rapid prototyping hardware or proprietary communication protocols. Instead, standard M & C technology is used.
The major advantages of this approach are:
- The availability of required interfaces in form of M & C technology in the relevant hardware and software can be assumed since the approach is based on standardized solutions.
- There is no need for porting any software onto each combination of target hardware and physical interconnection, which otherwise constitutes tremendous efforts.
- The same modeling tool interface can be used for model animation and in-model calibration during off-line and on-line experiments as well as during ECU operation.
- There is neither memory nor run-time overhead on the target hardware since no additional proprietary protocol handier is needed.
- There is no bandwidth overhead on the physical interconnection since no additional proprietary protocol is run.
- The run-time behavior of the model on the target hardware is unaffected since no background tasks or similar are needed for communication.
- Hence, especially ECUs (in general providing very low memory as well as run-time resources and intrinsically supporting M & C technologies on large numbers of hardware and interface variants) are ideally supported.
- A log & replay off-line debugging functionality is supported.

Off-line debugging means, for instance, that during an on-line experiment, first the measured data is logged onto the host's memory or hard disk. Afterwards, the data is replayed in off-line mode to the modeling tool, imitating the previously connected rapid prototyping hardware or a running ECU. This can be performed completely transparent to the modeling tool. Further common debug features enabled by this approach are single-step execution and model breakpoints, support by the modeling tool assumed.

### Detailed Description

### The Architecture

Several architectures underlying the generic model animation and in-model caiibration approach may be conceived of. As an example, a Target Server based approach is described in the following. Its main component is the Target Server running on the host computer and building the bridge between the modeling tools on the host and the target hardware.

Alternatively to a single target connected with one physical interconnection, several different hardware targets connected via diverse communication channels are conceivable, constituting a distributed system. Further, each modeling tool could be used for animation and calibration of any number of models on the target at a time.

### The Function

### The Target Server

The Target Server is the central component of the generic model animation and in-model calibration approach. Its role is that of target hardware and communications abstraction. The main task of the Target Server is to connect the modeling tools with the target hardware's M & C interface in a transparent manner.

Like this, the modeling tools need not be aware of the respective hardware used as target or of the communication protocols or physical interconnections being used as host/target interface. For this purpose, the Target Server may contain a dedicated protocol driver or similar for each supported communication protocol, in order to perform the translation from model animation related communication into M & C specific protocols.

Another task of the Target Server is to log measured.data onto the host's memory or hard disk, in order to use it for off-line debugging replay later on.

### The Modeling Tools

The modeling tools access the Target Server via its model animation interface. Like this, data needed for animating the model is passed from the target to the modeling tool. Further, calibration data is passed in the other direction from the modeling tool down to the target hardware.

Basic model animation and in-model calibration are available in the modeling tool as soon as it uses the Target Server for target access instead of proprietary communication protocols. For advanced log & replay features such as single-step debugging and model breakpoints, the modeling tool is assumed to provide additional functionality.

### The M & C Tool

An M & C tool could run in parallel to the modeling tools, using the very same M & C interfaces and communication channels. However, this is no prerequisite for generic model animation and in-model calibration but depicted for demonstrating the conventional M & C approach.

In case multiple (modeling or M & C) tools simultaneously attempt to calibrate one and the same set of parameters, an arbitrage scheme must be used for safety and data consistency. This arbitrage scheme could employ one or more of the following techniques, for instance:
- locking of all but one tool for calibration of the given parameter set (master/slave principle), e.g., by using read only parameters,
- notification of all other tools after calibrating parameters of the given set, or
- parameter refresh by all affected tools via periodic measurement of the given parameter set (polling).

### The Application Software

The application software running on the target mainly consists of the models' code, a real-time operating system or a scheduler invoking the model code, hardware and communication drivers enabling model input and output, etc.

The code generated from the models being simulated performs computations according to the models' specified behavior. The data structures in the code are accessed (read and write) by the standard M & C interface in order to perform conventional measurement and calibration or model animation and in-model calibration, respectively.

### The Standard M & C Interface

The standard M & C interface on the target constitutes the link between application software and the Target Server. It accesses model data for measurement and calibration and is connected via the physical interconnection with the host.
- For measurement, the M & C interface reads data from the application software and passes it via the M & C protocol to the Target Server which routes it to the modeling tools and the M & C tool (if applicable):

- For calibration, a modeling tool or the M & C tool sends new parameter values via Target Server and M & C protocol to the M & C interface which updates them in the application software on the target.

As standard M & C interface, for instance, the CCP, XCP, KWP2000, INCA, or ASAP1b protocols could be used, based on, e.g., CAN, Ethernet, FlexRay, USB, or K-Line as physical interconnection.

### Alternatives

### Decentralized Approach

Instead of using a central Target Server component, each modeling and M & C tool could incorporate the host-side M & C interface adaptation on its own. Like this, the abstraction from target hardware could still maintained, while the abstraction from communication channels would be transferred to the tools involved.

For this reason, target access would be less transparent, and the number of M & C interfaces being supported could be smaller. Further, the support of log & replay off-line debugging would be more expensive. On the other hand, not all modeling and M & C tools would need to comply with one and the same interface of a Target Server component as otherwise.

### M & C Tool Interface Approach

Instead of having modeling tools directly access the Target Server, an M & C tool could be used as intermediary. For this, the model animation interface would not be incorporated in the Target Server but in the M & C tool, e.g., an experiment environment for rapid prototyping. The modeling tools would then connect to this interface.

This approach could more easily provide support for calibration arbitrage since
- in general only the M & C tool and a single modeling tool compete in calibrating the same sets of parameters, and
- the M & C tool could receive calibration commands from the modeling tool, interpret them for its own purposes (refresh of displayed value, data storage, etc.), and pass them to the Target Server for the actual calibration process.

### Product Relevance

Starting points could be
- specific communication protocols and physical interconnections between host and target or the broad range thereof being supported by one modeling tool,
- a wide independence of target hardware one modeling tool shows,
- the fact that model animation and in-mode! calibration are performed in combination with ECUs rather than rapid prototyping hardware or PCs,
- the code being downloaded onto the simulation target, especially the protocol handlers,
- an extremely small memory footprint of the code being downloaded, compared to that without model animation and in-model calibration, and
- unexpectedly high communication throughput or run-time performance on the target when simultaneously measuring the same variables in a modeling tool and an M & C tool.

## Claims

1. A generic model animation and in-model calibration interface for rapid prototyping and software development, which uses measurement and calibration technologies with a host-target architecture.

2. A simulation system with an interface according to claim 1.

3. A computer-implemented method for simulating and verifying a control system under development by means of a simulation system according to claim 2.

4. A computer program with program coding means which are suitable for carrying out a method according to claim 3, when the computer program is run on a computer.

5. A computer program product with a computer-readable medium and a computer program according to claim 4 stored on the computer-readable medium.
